# EUROPÄISCHE PATENTSCHRIFT

(11) **EP 4 681 796 B1**
(45) Veröffentlichungstag und Bekanntmachung des Hinweises auf die Patenterteilung: **07.10.2026**
(21) Anmeldenummer: 25218074.0
(22) Anmeldetag: 23.04.2021
(51) Int. Cl.: B01D 46/00, B01D 46/52

(54) **ZICKZACK-GEFALTETES VLIESMATERIAL UND FILTER**
ZIGZAG-FOLDED NONWOVEN MATERIAL AND FILTER
MATÉRIAU NON-TISSÉ PLIÉ EN ZIGZAG ET FILTRE

(30) Priorität: 24.04.2020 DE 102020205247
(43) Veröffentlichungstag der Anmeldung: 21.01.2026
(62) Dokumentnummer(n) der früheren Anmeldung(en) nach Art. 76 EPÜ: 21725708.8 / 4 139 024
(73) Patentinhaber: IREMA-Filter GmbH, 92353 Postbauer-Pavelsbach (DE)
(72) Erfinder: Seeberger, Andreas, 90480 Nürnberg (DE)
(74) Vertreter: Wallinger Ricker Schlotter PartGmbB

(56) Entgegenhaltungen:
- EP-A1- 3 061 512
- EP-A2- 1 080 770
- DE-A1- 10 019 505
- DE-A1- 102014 117 506
- DE-A1- 4 004 079
- US-A1- 2017 217 557

## Beschreibung

Die Erfindung betrifft ein zickzack-gefaltetes Vliesmaterial für einen Filter, ein Verfahren zum Herstellen eines zickzack-gefalteten Vliesmaterials für einen Filter und eine Vorrichtung zum Herstellen eines zickzack-gefalteten Vliesmaterials für einen Filter.

Vliesmaterialien für Filter finden in verschiedensten Einsatzgebieten ihre Anwendung. Beispielsweise werden Sie bei Lüftungsanlagen für Gebäude verwendet, um eine Filterung der Frischluft zu ermöglichen. Vorzugsweise handelt es sich dabei um sogenannte Schwebstofffilter, welche zum Abscheiden von Schwebstoffen aus der Luft ausgebildet sind.

Dabei werden z. B. Pollen oder auch Allergene aus der angesaugten Umgebungsluft gefiltert, so dass diese lediglich in geringer Konzentration in das Gebäude eingebracht werden. Zu diesem Zweck weist das Vliesmaterial verschiedene Eigenschaften auf, um je nach Anwendung eine optimierte Filterung zu erlauben.

Üblicherweise wird Vliesmaterial durch ein sogenanntes Schmelzspinnverfahren, wie beispielsweise ein Spun-Bond-Verfahren oder ein Melt-Blown-Verfahren, hergestellt.

Um einen Filter mit großer Oberfläche auf geringem Raum zu schaffen, ist es üblich, Filtermaterial zu falten, so dass eine Zickzack-Anordnung entsteht, welche auch als plissierte Anordnung bezeichnet wird.

Aus dem Stand der Technik DE 40 04 079 A1 ist bekannt, Falten eines Filters mittels Vorsprüngen und Klebebeschichtungen zu beabstanden. Aus dem Stand der Technik DE 100 10 505 A1 ist bekannt, Abstandshalter aus geprägten Vertiefungen bzw. Erhebungen gegenüberliegender Falten zu bilden, welche miteinander verklebt werden. Aus dem

Stand der Technik DE 10 2014 117 506 A1 ist es bekannt, Prägungen durch klebstoffloses

Fügen miteinander zu verbinden. EP 1 080 770 A2 und US 2017/217557 A1 zeigen zwei weitere relevante Dokumente aus dem Stand der Technik.

Es ist eine Aufgabe der Erfindung, ein zickzack-gefaltetes Vliesmaterial für einen Filter zu verbessern. Insbesondere ist es eine Aufgabe der Erfindung, ein zickzack-gefaltetes Vliesmaterial für einen Filter mit einer erhöhten Stabilität bereitzustellen.

Diese Aufgabe wird durch ein Vliesmaterial und Filter nach den unabhängigen Ansprüchen gelöst. Vorteilhafte Ausgestaltungen der Erfindung sind in den abhängigen Ansprüchen beansprucht.

Ein erster Aspekt der Erfindung betrifft ein Verfahren zum Herstellen eines zickzack-gefalteten Vliesmaterials für einen Filter, wobei das Vliesmaterial durch ein Schmelzspinnverfahren hergestellt wird, folgende Arbeitsschritte aufweisend:
Falten des Vliesmaterials mittels einer Falteinrichtung, wobei eine Vielzahl von Falten entsteht, wobei die Falten das Vliesmaterial in erste Schenkel und zweite Schenkel unterteilen, so dass das Vliesmaterial zickzack-gefaltet ausgebildet wird; und danach Verschweißen eines Schweißbereichs des ersten Schenkels einer Falte mit wenigstens einem Schweißbereich des zweiten Schenkels einer Falte mittels eines Kunststoffschweißverfahrens, wobei zwischen den beiden einander zugewandten Seiten der Schenkel einer Falte eine Schweißverbindung ausgebildet wird.

Ein zweiter Aspekt der Erfindung betrifft eine Vorrichtung zum Herstellen eines zickzack-gefalteten Vliesmaterials für einen Filter, insbesondere eines Vliesmaterials gemäß dem ersten Aspekt der Erfindung und/oder zum Durchführen eines Verfahrens gemäß dem zweiten Aspekt der Erfindung, aufweisend:
wenigstens eine Falteinrichtung, welche dazu eingerichtet ist, eine Vielzahl von Falten zu bilden, welche das Vliesmaterial in erste Schenkel und zweite Schenkel unterteilen, so dass das Vliesmaterial zickzack-gefaltet ausgebildet ist; und
wenigstens eine Schweißeinrichtung, welche dazu eingerichtet ist, einen Schweißbereich des ersten Schenkels einer Falte mit wenigstens einem Schweißbereich des zweiten Schenkels einer Falte mittels eines Kunststoffschweißverfahrens zwischen den Schenkeln einer Falte in gefaltetem Zustand zu verschweißen, wobei zwischen den beiden einander zugewandten Seiten der Schenkel einer Falte eine Schweißverbindung ausgebildet wird.

Ein dritter Aspekt der Erfindung betrifft ein zickzack-gefaltetes Vliesmaterial für einen Filter, welches eine Vielzahl an Falten aufweist, welche das Vliesmaterial in erste Schenkel und zweite Schenkel unterteilen, wobei jeweils zwischen einem ersten Schenkel und einem zweiten Schenkel einer Falte in wenigstens einem Schweißbereich eine stoffschlüssige Schweißverbindung angeordnet ist, welche den ersten Schenkel mit dem zweiten Schenkel verbindet, wobei Schweißbereiche, welche zwei Schenkel einer Falte verbinden, ausschließlich an einander zugewandten Seiten der Schenkel der Falte ausgebildet sind, wobei die Oberfläche wenigstens im Schweißbereich von einander zugewandten Seiten der Schenkel einer Falte durch die Schweißverbindung verändert ist und die Oberfläche des Bereichs der dem Schweißbereich gegenüberliegenden Seite der Schenkel einer Falte durch die Schweißverbindung nicht verändert ist .

Die Erfindung basiert insbesondere auf dem Ansatz, ein zickzack-gefaltetes Vliesmaterial für einen Filter herzustellen, indem die Schenkel einer Falte miteinander verschweißt werden. Hierdurch wird eine hohe Stabilität des Filtermediums gewährleistet.

Dabei ist erfindungsgemäß vorgesehen, das Vliesmaterial beim Schweißen nur jeweils von einer Seite des Vliesmaterials zu bearbeiten, indem ein Wärmekontakt-Schweißverfahren zum Einsatz kommt. Hierbei werden zum Bilden von einem Schweißbereich Fügeflächen auf den inneren Schenkelseiten in der Weise erhitzt, dass das Vliesmaterial an der Oberfläche der Schweißbereiche plastifiziert wird. Danach werden die Fügeflächen in Kontakt gebracht, so dass sich in dem Schweißbereich eine Schweißverbindung ausbildet, durch welche die Schenkel der Falte vorzugsweise nicht mehr zerstörungsfrei voneinander lösbar sind. Auf diese Weise wird das Filtermedium nur von einer Seite durch Wärmekontakt geschweißt. Ein Gegenpunkt beim Schweißen ist nicht notwendig. Einerseits ist auf diese Weise der Aufwand zum Herstellen eines solchen Vliesmaterials gering. Beispielsweise kann auf einen Einsatz von Klebstoff oder anderen Befestigungsmitteln, welche mit weiteren Kosten verbunden wären, verzichtet werden. Andererseits wird die effektive Filterfläche durch die Schweißung kaum beeinträchtigt. Insbesondere gegenüber Filtermaterialien, bei welchen die Schenkel mit Kleberaupen aneinander befestigt und ggf. beabstandet werden, können bis zu 15% Kosten und sogar bis zu 30% Gewicht eingespart werden.

Erfindungsgemäß ist diejenige Seite der Schenkel einer Falte, welche der Seite gegenüberliegt, an welcher die Schweißbereiche angeordnet sind, von der Schweißverbindung im Wesentlichen unbeeinträchtigt. Auf diese Weise wird die Funktion des Vliesmaterials, nämlich insbesondere ein Filtrieren eines Fluids und/oder eines Gases bzw. Gasgemisches, im Wesentlichen nicht beeinflusst. Ferner wird durch die Schweißverbindung erreicht, dass ein unbeabsichtigtes Auftrennen der Schweißbereiche im Wesentlichen verhindert wird und das Vliesmaterial im Gebrauch seine zickzack-gefaltete Form beibehält. Auf diese Weise ist das Vliesmaterial sehr stabil sowie langlebig und eignet sich somit für einen Einsatz in diversen Anwendungsbereichen.

Von besonderer Bedeutung für die Erfindung ist in diesem Zusammenhang, dass das Vliesmaterial erst nach dem Falten verschweißt wird, das heißt, dass die Plastifizierung der Oberflächen der Schweißbereiche erst dann erfolgt, wenn die beiden Schenkel einer Falte entlang einer Faltkante bereits gefaltet sind.

In diesem Zustand sind die beiden gegenüberliegenden Oberflächen der Schenkel, auf welchen die Schweißbereiche liegen, in unmittelbare Nähe zueinander gebracht oder grenzen sogar aneinander an. Daher können die Schweißbereiche der gegenüberliegenden Oberflächen mittels einer Schweißeinrichtung in unmittelbarer Nähe zueinander plastifiziert werden. Aus diesem Grunde können diese, sofort nachdem die Schweißeinrichtung eine plastifizierte Stelle verlassen hat, an dieser Stelle zusammengefügt werden. Dies ermöglicht einerseits eine sehr gute Kontrolle des Fügevorgangs zwischen den Schweißbereichen, andererseits kann die zur Plastifizierung eingebrachte Energie auf ein Minimum reduziert werden, welches gerade ausreicht, um eine Schweißverbindung bzw. Schweißnaht zwischen den Schenkeln zu erzeugen. Abkühlphasen der Schweißbereiche müssen aufgrund der bereits realisierten räumlichen Nähe der beiden Schenkel nicht oder nur zu geringem Maße bei der Dosierung der eingebrachten Energie berücksichtigt werden. Auf diese Weise kann vorzugsweise auch gewährleistet werden, dass eine den Schweißbereichen gegenüberliegende Oberfläche durch das Einbringen von (thermischer) Energie nicht durch das Schweißen bzw. die Schweißverbindung beeinträchtigt ist. Dies beruht darauf, dass die Dosierung aufgrund der bereits vorhandenen Faltung während des Schweißvorgangs besonders gering dosiert werden kann.

Auch kann in gefaltetem Zustand, bzw. mit aufgestellten Falten, sofort nach dem Plastifizieren Druck auf die zu verschweißenden Schenkel aufgebracht werden. Daher braucht nur wenig thermische Energie punktuell zugeführt werden und die zu fügenden Flächen bzw. Schweißbereiche können klein gehalten werden.

Durch die Erfindung lassen sich besonders feste und doch kleine Schweißnähte realisieren. Die dafür benötigte Energie kann demgegenüber auf ein Mindestmaß reduziert werden. Die Schweißnähte erreichen dabei vorzugsweise Festigkeitswerte, welche einer mittels Fäden erzeugten Naht entsprechen.

Aus dem Stand der Technik ist es nicht bekannt, ein Kunststoffschweißverfahren an Schenkeln im bereits gefalteten Zustand durchzuführen.

Eine Längsrichtung einer Falte im Sinne der Erfindung erstreckt sich vorzugsweise im Wesentlichen entlang einer Faltkante der Falte.

Eine Ausbuchtung im Sinne der Erfindung ist vorzugsweise eine Erhebung aus dem im Wesentlichen im Ausgangszustand ebenen Vliesmaterial. Weiter vorzugsweise ist eine Ausbuchtung eine Prägung.

Eine Veränderung der Oberfläche durch eine Schweißverbindung im Sinne der Erfindung ist eine Veränderung einer Struktur und/oder Oberflächenbeschaffenheit wenigstens eines Teils der Oberflächen im Schweißbereich im Vergleich zu Oberflächen außerhalb des Schweißbereichs.

In einer bevorzugten Ausgestaltung des Verfahrens fährt ein Heizelement oder Vielzahl von Heizelementen zwischen die Schenkel einer Falte ein und erhitzt die Bereiche, wobei die Bereiche beim Anfahren des Heizelements in Kontakt kommen und wenigstens einen Schweißbereich ausbilden.

Durch die Verwendung eines Heizelements kann die Wärme besonders gut dosiert zu den Schweißbereichen gebracht werden.

Ein Heizelement im Sinne der Erfindung dient zum Aufbringen von thermischer Energie. Vorzugsweise ist das Heizelement eingerichtet zum Wärmekontakt-Schweißen, Ultraschall-Schweißen, Infrarot-Schweißen und/oder Laser-Schweißen.

In einer weiteren bevorzugten Ausgestaltung des Verfahrens werden Falten auf beiden Seiten des Vliesmaterials verschweißt. Hierdurch kann bei ebenen Filterkonfigurationen eine besonders hohe Festigkeit des Vliesmaterials erreicht werden. Ist eine solche Festigkeit nicht wichtig, können in einer alternativen Ausgestaltung auch ausschließlich Falten auf einer Seite des Vliesmaterials verschweißt werden. Hierdurch kann mittels des Vliesmaterials eine Trommelfilterkonfiguration verwirklicht werden.

In einer weiteren bevorzugten Ausgestaltung weist das Verfahren folgenden weiteren Arbeitsschritt auf:
Prägen wenigstens einer Ausbuchtung in dem ersten Schenkel und/oder wenigstens einer Ausbuchtung in dem zweiten Schenkel einer Falte, wobei die Ausbuchtungen einander zugewandt sind.

In einer weiteren bevorzugten Ausgestaltung des Verfahrens fährt das Heizelement wenigstens im Wesentlichen in senkrechter Richtung zur Herstellungsrichtung des Vliesmaterials zwischen die Schenkel ein und ein Mittelwert einer Bewegungsgeschwindigkeit des Heizelements ist größer, vorzugsweise 10 bis 100 mal größer, als eine Bewegungsgeschwindigkeit des bereits gefalteten Vliesmaterials in Herstellungsrichtung. Hierdurch wird gewährleistet, dass eine möglichst saubere und gerade Schweißverbindung ohne wesentliche Verspannungen erzeugt wird.

In einer weiteren bevorzugten Ausgestaltung des Verfahrens verfährt das Heizelement zusätzlich in Herstellungsrichtung des Vliesmaterials. Das Heizelement führt daher insgesamt vorzugsweise eine Kreisbewegung oder Exzenterbewegung aus. Hierdurch wird eine höhere Transportgeschwindigkeit des gefalteten Vliesmaterials in Herstellungsrichtung und damit auch eine höhere Herstellungsgeschwindigkeit ermöglicht.

Die in Bezug auf den ersten Aspekt der Erfindung und dessen vorteilhafte Ausgestaltung beschriebenen Merkmale und Vorteile gelten auch für den zweiten und dritten Aspekt der Erfindung und dessen vorteilhafte Ausgestaltung sowie umgekehrt.

In einer bevorzugten Ausgestaltung der Vorrichtung weist die Schweißeinrichtung ein Heizelement auf, welches zwischen die Schenkel einfahrbar ist und die Bereiche erhitzt, wobei die Bereiche beim Anfahren des Heizelements in Kontakt kommen und einen Schweißbereich ausbilden.

In einer weiteren bevorzugten Ausgestaltung der Vorrichtung weist die Schweißeinrichtung zusätzlich einen Gegenschweißelement, insbesondere einen Schweißamboss, auf, welcher eingerichtet ist, um zwischen die Schenkel einer benachbarten Falte eingefahren zu werden, in der Weise, dass das Heizelement und das Gegenschweißelement den wenigstens einen Schweißbereich umschließen. Hierdurch können definierte und genaue Verschweißungen erreicht werden.

In einer weiteren bevorzugten Ausgestaltung weist die Vorrichtung eine zweite Schweißeinrichtungen auf und ist in der Weise ausgebildet, dass die Heizelemente der beiden Schweißeinrichtungen von entgegengesetzten Seiten des Vliesmaterials zwischen die Schenkel eingefahren werden. Durch das Vorsehen der zweiten Schweißeinrichtung können in engegengesetzte Richtung ausgerichtete Falten gleichzeitig verschweißt werden.

In einer weiteren bevorzugten Ausgestaltung weist die Vorrichtung des Weiteren wenigstens eine Prägeeinrichtung auf, welche dazu eingerichtet ist, wenigstens eine Ausbuchtung in dem ersten Schenkel und/oder wenigstens eine Ausbuchtung in dem zweiten Schenkel einer Falte zu prägen, in der Weise, dass die Ausbuchtungen einander zugewandt sind.

In einer weiteren bevorzugten Ausgestaltung ist die wenigstens eine Schweißeinrichtung des Weiteren eingerichtet, um das Heizelement in Herstellungsrichtung des Vliesmaterials zu verfahren. Hierdurch können, wie bereits erläutert, höhere Herstellungsgeschwindigkeiten realisiert werden.

In einer bevorzugten Ausgestaltung des Vliesmaterials ist ausschließlich eine Struktur von Oberflächen einander zugewandter Seiten der Schenkel der Falten im Vergleich zu Oberflächen außerhalb des Schweißbereichs durch die Schweißverbindung, welche zwei Schenkel einer Falte verbindet, verändert.

Daher wird auch nur die Struktur des Vliesmaterials auf der Seite des Vliesmaterials beeinträchtigt, auf welcher die Schweißverbindung ausgebildet ist. Die Oberflächen der Bereiche der dem Schweißbereich abgewandten Seiten der Schenkel einer Falte sind durch das Schweißen nicht beeinträchtigt. Auf diese Weise kann erreicht werden, dass die Filterwirkung des Vliesmaterials im Wesentlichen nicht beeinflusst wird. Lediglich die Bereiche des Vliesmaterials, an denen Schweißbereiche ausgebildet sind, sind in der Filterwirkung beeinflusst.

In einer weiteren bevorzugten Ausgestaltung des Vliesmaterials weist wenigstens eine Oberfläche des Vliesmaterials eine Strukturierung auf, welche insbesondere rautenförmig und/oder wabenförmig ausgebildet ist.

Diese Strukturierung begünstigt das Herstellen der Schweißverbindung. Zudem wird durch die Strukturierung das Vliesmaterial vorzugsweise versteift. Beispielsweise kann durch ein Raster, welches gitterartig ausgebildet ist, wie bei einem kristallischen Objekt eine zusätzliche Verstärkung des Vliesmaterials ermöglicht werden. Insbesondere erweisen sich dabei rautenförmige, wabenförmige bzw. allgemein mehreckige Strukturen als besonders stabile Strukturen.

In einer weiteren bevorzugten Ausgestaltung des Vliesmaterials sind mehrere Schweißbereiche zwischen den Schenkeln einer Falte mit definierter Länge und wenigstens im Wesentlichen senkrecht zur Längsrichtung der Falte ausgebildet.

Dadurch wird ermöglicht, dass zusätzliche Filterhohlräume bzw. Filterkanäle ausgebildet sind. Somit kann eine Filterung nicht nur in Längsrichtung der Falte, sondern auch quer zu dieser erfolgen. Auf diese Weise wird eine besonders effiziente Filterung erreicht.

Beispielsweise kann dadurch auch ein zu filterndes Fluid oder Gas bzw. Gasgemisch in mehreren Strömungsrichtungen gefiltert werden. Insbesondere ist die Strömungsrichtung, in welcher das zu filternde Fluid oder Gas bzw. Gasgemisch strömt, von zu vernachlässigender Relevanz für eine optimierte Filterung.

Ein Kunststoffschweißverfahren im Sinne der Erfindung ist vorzugsweise ein Schweißen durch lokales Plastifizieren und anschließendes In-Kontakt-Bringen von Fügeflächen zu verbindender, insbesondere großflächiger, Kunststoffstrukturen. Weiter vorzugsweise ist eine durch ein Kunststoffschweißverfahren hergestellte Schweißverbindung in der Weise ausgebildet, dass zwei zusammengeschweißte Strukturen nicht zerstörungsfrei getrennt werden können. Weiter vorzugsweise kann das Plastifizieren durch Wärmekontakt-Schweißen, Laser-Schweißen, Ultraschall-Schweißen oder Infrarot-Schweißen ausgeführt werden.

In einer weiteren bevorzugten Ausgestaltung sind die Schweißbereiche an wenigstens einer Ausbuchtung in dem ersten Schenkel und/oder an wenigstens einer Ausbuchtung in dem zweiten Schenkel einer Falte angeordnet, wobei die Ausbuchtungen einander zugewandt sind.

Auf diese Weise können Zugbeanspruchungen und/oder Druckbeanspruchungen verringert, insbesondere verhindert, werden, welche aufgrund des Vliesmaterials auf die Schweißverbindungen in den Schweißbereichen wirken. Diese entstehen für gewöhnlich aufgrund der durch die Schweißverbindungen entstandenen Verformungen des Vliesmaterials.

Vorzugsweise kann eine Ausbuchtung oder können mehrere Ausbuchtungen an lediglich einer ersten Seite des Vliesmaterials angeordnet sein. Alternativ und/oder zusätzlich kann eine Ausbuchtung oder können mehrere Ausbuchtungen an einer der ersten Seite abgewandten zweiten Seite des Vliesmaterials angeordnet sein.

Auch ist es möglich, dass die Ausbuchtungen abwechselnd an der ersten und der zweiten Seite des Vliesmaterials angeordnet sind, oder in einem gänzlich anderen Muster. Ferner kann ebenfalls eine zufällige Anordnung der Ausbuchtungen vorgesehen sein, um beispielsweise eine im Wesentlichen gleichverteilte Anordnung der Ausbuchtungen zu erreichen.

In einer weiteren bevorzugten Ausgestaltung des Vliesmaterials ist die wenigstens eine Ausbuchtung des ersten Schenkels und/oder des zweiten Schenkels einer Falte mit definierter Länge und wenigstens im Wesentlichen senkrecht zur Längsrichtung der Falte ausgebildet.

Insbesondere kann dadurch ermöglicht werden, dass die Schweißbereiche im Wesentlichen an bzw. auf den Ausbuchungen ausgebildet sind, um Zugbeanspruchungen und/oder Druckbeanspruchungen weiter zu reduzieren.

In einer weiteren bevorzugten Ausgestaltung des Vliesmaterials sind eine Ausbuchtung des ersten Schenkels und eine Ausbuchtung des zweiten Schenkels einer Falte im Wesentlichen gegenüberliegend angeordnet.

Auch dadurch können Zugbeanspruchungen und/oder Druckbeanspruchungen aufgrund der Geometrie des Vliesmaterials verringert, insbesondere verhindert, werden. Insbesondere kann, wenn sich die Ausbuchtungen des ersten Schenkels und des zweiten Schenkels im Wesentlichen gegenüberliegen, ermöglicht werden, dass der Winkel der jeweiligen Falte stumpfer ausgebildet werden kann als wenn die Ausbuchtungen asymmetrisch zueinander ausgebildet sind oder nicht vorhanden sind. Somit ist eine Filterung einer Flüssigkeit und/oder eines Gases bzw. Gasgemisches besser anpassbar.

In einer weiteren bevorzugten Ausgestaltung erhebt sich die Ausbuchtung des ersten Schenkels und/oder die Ausbuchtung des zweiten Schenkels einer Falte ausgehend von der Falte, insbesondere kontinuierlich oder stufenweise zunehmend, wobei vorzugsweise die Erhebung der Ausbuchtung des ersten Schenkels und/oder des zweiten Schenkels im Wesentlichen an der Falte am geringsten ist.

Zum einen kann dadurch ermöglicht werden, dass Schweißbereiche, welche vorzugsweise auf den Ausbuchtungen angeordnet sind, keinen oder lediglich geringen Zugbeanspruchungen und/oder Druckbeanspruchungen ausgesetzt sind. Andererseits kann auf diese Weise die Filterwirkung des Vliesmaterials weiter verbessert werden, da weitere Strömungsräume dadurch ausgebildet sind und somit eine Strömungsrichtung eines zu filternden Gases oder Fluids weniger relevant für eine optimierte Filterung ist.

In einer weiteren bevorzugten Ausgestaltung des Vliesmaterials weisen wenigstens die Oberfläche im Schweißbereich von einander zugewandten Seiten der Schenkel einer Falte und wenigstens die Oberfläche des Bereichs der dem Schweißbereich gegenüberliegenden Seite der Schenkel einer Falte eine unterschiedliche Struktur auf.

Vorzugsweise weisen diejenigen Bereiche, welche als Schweißbereich ausgebildet sind, eine für die Schweißverbindung optimierte Faserstruktur des Vliesmaterials auf. Diejenige Oberfläche der Bereiche, welche an der dem Schweißbereich gegenüberliegenden Seite angeordnet ist, ist hingegen insbesondere für eine Filterung optimiert und weist dementsprechend eine andere Struktur auf.

Ferner kann somit das Vliesmaterial z. B. an eine Strömungsrichtung zum Filtern eines Fluids oder Gases angepasst werden. Alternativ oder zusätzlich können auf diese Weise auch andere Filtereigenschaften, wie etwa die minimal durchlässige Partikelgröße eines zu filternden Fluids oder Gases, adaptiert werden.

In einer weiteren bevorzugten Ausgestaltung ist das Vliesmaterial aus wenigstens zwei Lagen ausgebildet.

Zum einen kann auf diese Weise das Vliesmaterial in der Weise ausgebildet sein, dass die Oberflächen von einander zugewandten Seiten der Schenkel einer Falte für eine Schweißverbindung optimiert sind. Des Weiteren können die Filtereigenschaften der zweiten Lage für eine Filterung optimiert werden.

Weitere Merkmale, Vorteile und Anwendungsmöglichkeiten der Erfindung ergeben sich aus der nachfolgenden Beschreibung von Ausführungsbeispielen im Zusammenhang mit den Figuren, in denen dieselben Bezugszeichen für dieselben oder einander entsprechende Elemente der Erfindung verwendet werden. Es zeigen wenigstens teilweise schematisch:
- **Fig. 1**: ein Ausführungsbeispiel eines zickzack-gefalteten Vliesmaterials für einen Filter in der Seitenansicht;
- **Fig. 2**: ein weiteres Ausführungsbeispiel eines zickzack-gefalteten Vliesmaterials für einen Filter in der Seitenansicht;
- **Fig. 3**: ein Ausführungsbeispiel eines zickzack-gefalteten Vliesmaterials für einen Filter in der Draufsicht;
- **Fig. 4**: ein Ausführungsbeispiel einer Vorrichtung zum Herstellen eines zickzack-gefalteten Vliesmaterials; und
- **Fig. 5**: ein Ausführungsbeispiel eines Verfahrens zum Herstellen eines zickzack-gefalteten Vliesmaterials.

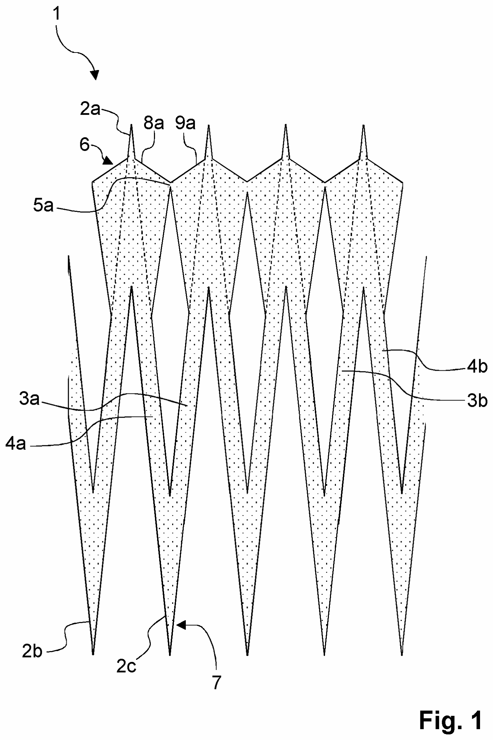

**Fig. 1** zeigt ein Ausführungsbeispiel eines zickzack-gefalteten Vliesmaterials 1 für einen Filter in der Seitenansicht. Das Vliesmaterial 1, welches vorzugsweise mittels eines sogenannten Schmelzspinnverfahrens, wie etwa einem Spun-Bond-Verfahren oder einem Melt-Blown-Verfahren, hergestellt wurde, weist eine Vielzahl von Falten 2a, 2b, 2c auf, welche das Vliesmaterial 1 in erste Schenkel 3a, 3b und zweite Schenkel 4a, 4b unterteilen.

Die Falten 2a, 2b, 2c verlaufen vorzugsweise wenigstens im Wesentlichen parallel zueinander. Um eine zickzack-gefaltete Ausgestaltung des Vliesmaterials 1 zu erreichen, sind die Falten 2a, 2b, 2c dabei abwechselnd in zueinander entgegengesetzten Faltkanten gefaltet. Dadurch wird eine ziehharmonikaförmige bzw. zickzackförmige Ausgestaltung des Vliesmaterials 1 erreicht.

Zwischen jeweils einem ersten Schenkel 3a, 3b und einem zweiten Schenkel 4a, 4b einer Falte 2a, 2b, 2c ist eine stoffschlüssige Verbindung in wenigstens einem Schweißbereich 5a, 5b angeordnet. Dabei sind die Schweißbereiche 5a, 5b lediglich zwischen den Schenkeln 3a, 3b, 4a, 4b einer Falte 2a, 2b, 2c von einander zugewandten Seiten der Schenkel 3a, 3b, 4a, 4b einer Falte 2a, 2b, 2c ausgebildet.

Insbesondere ist die Oberfläche einander zugewandter Seiten der Schenkel 3a, 3b, 4a, 4b einer Falte 2a, 2b, 2c durch die stoffschlüssige Schweißverbindung lokal verschweißt, wobei die Bereiche an der jeweiligen von dem Schweißbereich 5a, 5b abgewandten Seite durch das Schweißen nicht beeinträchtigt sind.

Wie in diesem Ausführungsbeispiel gezeigt, sind im oberen Bereich an der Falte 2c bzw. dem Schweißbereich 5a Ausbuchtungen 8a, 9a ausgebildet. Dabei ist je eine Ausbuchtung 8a in dem ersten Schenkel 3a und je eine Ausbuchtung 9a in dem zweiten Schenkel 4a der Falte 2c ausgebildet, wobei die Ausbuchtungen 8a, 9a einander zugewandt bzw. in Richtung zueinander ausgebildet sind.

Vorzugsweise erhebt sich dabei die Ausbuchtung 8a des ersten Schenkels 3a und/oder die Ausbuchtung 9a des zweiten Schenkels 4a der Falte 2c ausgehend von der Falte 2c. Dies geschieht weiter vorzugsweise kontinuierlich oder stufenweise. Des Weiteren ist die Erhebung der Ausbuchtungen 8a, 9a des ersten Schenkels 3a und/oder des zweiten Schenkels 4a im Wesentlichen an der Falte 2c am geringsten bzw. kleinsten.

Weiter vorzugsweise können die Ausbuchtungen 8a, 9a als Plateaus ausgebildet sein, welche aus einer Lage des Vliesmaterials 1 gebildet werden. Vorzugsweise kann diese Lage ein Polymer oder eine Polymermischung mit einem niedrigeren Schmelzpunkt als andere Lagen des Vliesmaterials 1 aufweisen. Weiter vorzugsweise kann eine solche Lage die Gesamte Oberfläche einer Seite oder beider Seiten des Vliesmaterials bedecken.

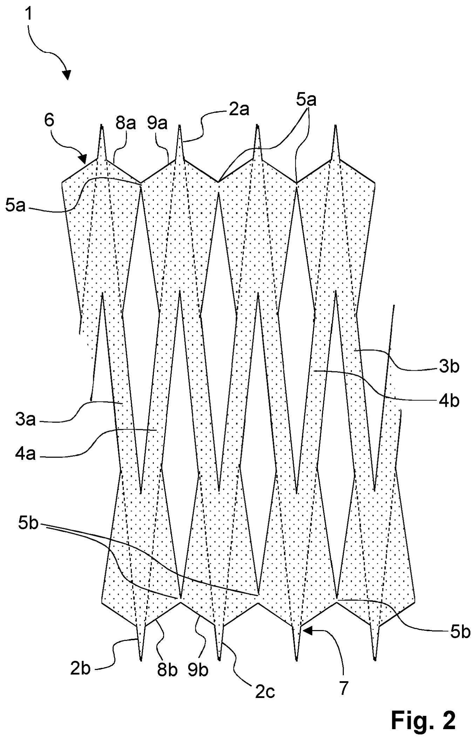

**Fig.** 2 zeigt ein weiteres Ausführungsbeispiel eines zickzack-gefalteten Vliesmaterials 1 für einen Filter in der Seitenansicht. Dieses Ausführungsbeispiel unterscheidet sich im Vergleich zu dem Ausführungsbeispiel von Fig. 1 darin, dass auch an den unten angeordneten Falten 2b, 2c Ausbuchtungen 8b, 9b angeordnet sind, um die ersten Schenkel 3a, 3b und zweiten Schenkel 4a, 4b einer Falte 2b, 2c mittels Schweißen dauerhaft zu verbinden.

Alternativ kann das Vliesmaterial 1 in der Weise ausgebildet sein, dass lediglich an einem der beiden Schenkel 3a, 3b, 4a, 4b einer Falte 2a, 2b, 2c eine Ausbuchtung 8a, 8b, 9a, 9b angeordnet ist. Dadurch wird der Herstellungsaufwand zum Erzeugen der Ausbuchtungen 8a, 8b, 9a, 9b im Wesentlichen verringert.

Dabei kann wenigstens die Oberfläche von einander zugewandten Seiten der Schenkel 3a, 3b, 4a, 4b einer Falte 2a, 2b, 2c im Schweißbereich 5a, 5b und wenigstens der Bereich von der Oberfläche der dem Schweißbereich 5a, 5b gegenüberliegenden Seite der Schenkel 3a, 3b, 4a, 4b einer Falte 2a, 2b, 2c eine unterschiedliche Struktur aufweisen.

Ferner weist wenigstens der Bereich der dem Schweißbereich 5a, 5b gegenüberliegenden Seite der Schenkel 3a, 3b, 4a, 4b einer Falte 2a, 2b, 2c ein Raster auf. Dieses ist vorzugsweise in der Form eines Vielecks ausgebildet. Als besonders geeignet hat sich eine Rautenform und insbesondere eine wabenförmige Ausgestaltung des Rasters erwiesen.

Um insbesondere eine erste Oberfläche 6 auszubilden, welche vorzugsweise rasterförmig ausgebildet ist und von der der ersten Oberfläche 6 gegenüberliegenden zweiten Oberfläche 7 unterschiedlich ist, weist das Vliesmaterial 1 wenigstens zwei Lagen auf. Dabei bildet insbesondere eine erste Lage die erste Oberfläche 6 und eine zweite Lage die der ersten Oberfläche 6 gegenüberliegende zweite Oberfläche 7 des Vliesmaterials 1.

Vorzugsweise weisen zwei zueinander benachbarte Falten 2a, 2b, 2c einen Abstand von wenigstens etwa 10 mm, bevorzugt wenigstens etwa 14 mm, besonders bevorzugt wenigstens etwa 17 mm, und am bevorzugtesten etwa 20 mm auf. Alternativ kann der Abstand auch größer sein, etwa 30 mm oder mehr. Ferner können die Abstände zweier benachbarter Falten 2a, 2b, 2c auch unregelmäßig zueinander sein.

Für die Herstellung eines ebenen Filters sind vorzugsweise die Oberflächen der Schweißbereiche 5a auf der einen Seite des Vliesmaterials 1 wie auch die Oberflächen der Schweißbereiche 5b auf der anderen Seite des Vliesmaterials 1 miteinander verschweißt. Es kann je nach Anwendungsfall für die Festigkeit eines solchen Filters jedoch auch ausreichen, nur die eine Art der Schweißbereiche, 5a oder 5b, auszubilden. Für die Herstellung eines Trommelfilters, bei welchem das gefaltete Vliesmaterial 1 in einem Ring angeordnet wird, wird sogar im Allgemeinen nur eine Art der Schweißbereiche 5a oder 5b ausgebildet.

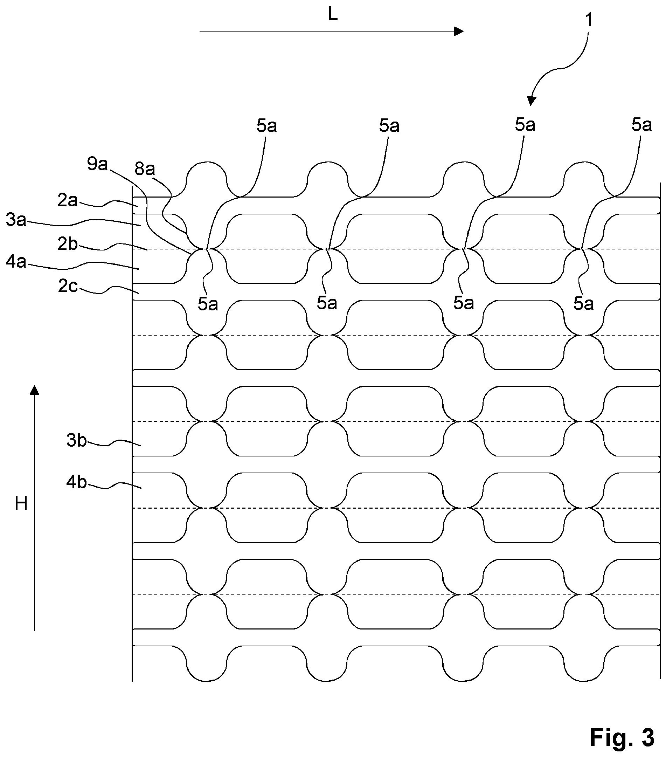

**Fig. 3** zeigt ein Ausführungsbeispiel eines zickzack-gefalteten Vliesmaterials 1 für einen Filter in der Draufsicht. Die Ausbuchtungen 8a, 8b, 9a, 9b sind in der Weise ausgebildet, dass sich die Schweißbereiche 5a, 5b, insbesondere die Schweißverbindungen, im Bereich der Ausbuchtungen 8a, 8b, 9a, 9b befinden. Dies reduziert vorzugsweise Zug- und Druckbeanspruchungen auf die Schweißverbindungen, da die ersten und zweiten Schenkel 3a, 3b, 4a, 4b einer Falte 2a, 2b, 2c nicht zusätzlich zueinander verformt werden müssen.

In diesem Ausführungsbeispiel sind die Ausbuchtungen 8a, 8b, 9a, 9b, die Schweißbereiche 5a, 5b bzw. die Falten 2a, 2b, 2c im Wesentlichen gleichverteilt ausgebildet. Jedoch kann auch eine ungleichmäßige Verteilung der Ausbuchtungen 8a, 8b, 9a, 9b und/oder der Schweißbereiche 5a, 5b und/oder der Falten 2a, 2b, 2c erfolgen. Insbesondere ist auch eine asymmetrische Anordnung der Falten 2a, 2b, 2c zueinander möglich.

Exemplarisch ist unterhalb der obersten gezeigten ersten Falte 2a eine erste Ausbuchtung 8a ausgebildet, welcher einer Ausbuchtung 9a oberhalb der dritten gezeigten Falte 2c im Wesentlichen gegenüberliegt. Die erste Ausbuchtung 8a ist an einem ersten Schenkel 3a der ersten Falte 2a und die zweite Ausbuchtung 9a an einem zweiten Schenkel 4a der dritten Falte 2c ausgebildet. An dem Kontaktbereich der ersten Ausbuchtung 8a und der zweiten Ausbuchtung 9a ist dabei ein Schweißbereich 5a angeordnet, in welchem eine Schweißverbindung die erste Ausbuchtung 8a mit der zweiten Ausbuchtung 9a stoffschlüssig miteinander verbindet.

Zwischen der ersten Falte 2a und der dritten Falte 2c ist eine zweite Falte 2b angeordnet, welche gestrichelt dargestellt ist und in die der ersten Falte 2a und dritten Falte 2c entgegengesetzten Richtung gefaltet bzw. geknickt ist. In dieser Draufsicht des Vliesmaterials 1 ist lediglich eine erste Seite bzw. Oberfläche des Vliesmaterials 1 sichtbar. Somit wäre es grundsätzlich auch möglich, dass eine ähnliche Ausgestaltung zweier zueinander benachbarter Falten 2a, 2b, 2c auf der anderen Seite bzw. Oberfläche des Vliesmaterials 1 ausgebildet ist, wie sie zwischen der ersten Falte 2a und der dritten Falte 2c vorzufinden ist.

Ferner sind vorzugsweise mehrere Schweißbereiche 5a, 5b zwischen den Schenkeln 3a, 3b, 4a, 4b einer Falte 2a, 2b, 2c mit definierter Länge und wenigstens im Wesentlichen senkrecht zur Längsrichtung L der Falten 2a, 2b, 2c ausgebildet, wobei eine solche Ausgestaltung in dieser Draufsicht nicht erkennbar ist. Weiter vorzugsweise sind die Ausbuchtungen 8a, 8b, 9a, 9b des ersten Schenkels 3a, 3b und/oder des zweiten Schenkels 4a, 4b einer Falte 2a, 2b, 2c ebenfalls mit definierter Länge und wenigstens im Wesentlichen senkrecht zur Längsrichtung L der Falten 2a, 2b, 2c ausgebildet.

Der Pfeil H gibt eine übliche Herstellungsrichtung eines gefalteten Vliesmaterials an. Das im Allgemeinen als Rollenware gelagerte Vliesmaterial wird entlang einer Produktionslinie, welche die Herstellungsrichtung H vorgibt, im Wesentlichen quer zu seinen beiden Kanten gefaltet.

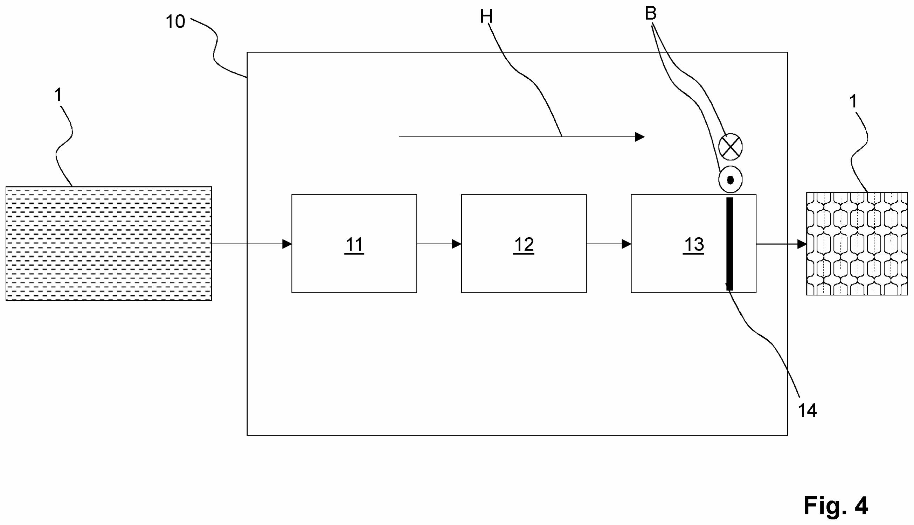

**Fig. 4** zeigt ein Ausführungsbeispiel einer Vorrichtung 10 zum Herstellen eines zickzack-gefalteten Vliesmaterials 1 für einen Filter.

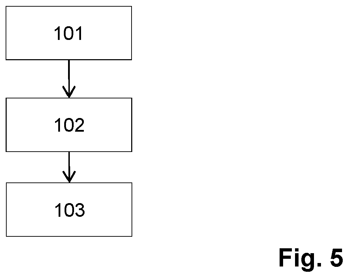

Anhand dieser Vorrichtung 10 sowie des Blockdiagramms gemäß **Fig. 5****,** wird ein Ausführungsbeispiel eines Verfahrens 100 zum Herstellen eines zickzack-gefalteten Vliesmaterials, wobei die Schenkel der Falten mittels einer stoffschlüssige Schweißverbindung aneinander befestigt sind, erläutert.

Die einzelnen Stationen der Vorrichtung 10 werden von dem Vliesmaterial 1 in dem Herstellungsverfahren 100 nacheinander in Herstellungsrichtung H durchlaufen. Das Verfahren 100 weist hierbei hintereinander wenigstens die Arbeitsschritte Falten 102 und Schwei-ßen bzw. Fügen 103 auf. Vorzugsweise weist das Verfahren 100 vor dem Falten noch einen Arbeitsschritt des Prägens 101 des Vliesmaterial 1 auf.

Die Vorrichtung 10 weist vorzugsweise eine Prägeeinrichtung 11 auf, welche dazu eingerichtet ist, insbesondere vor dem Falten, wenigstens eine Ausbuchtung 8a, 8b in einen ersten Schenkel 3a, 3b und/oder wenigstens eine Ausbuchtung 9a, 9b in einen zweiten Schenkel 4a, 4b einer Falte 2a, 2b, 2c zu prägen 101, wobei der erste Schenkel 3a, 3b dem zweiten Schenkel 4a, 4b zugewandt ist. Hierzu wird das Vliesmaterial 1 vorzugsweise flächig in die Prägeeinrichtung 11 eingebracht, um eine oder mehrere Ausbuchtungen 8a, 8b, 9a, 9b in dem Vliesmaterial 1 zu bilden.

In einem Arbeitsschritt 102 wird das Vliesmaterial 1 gefaltet. Hierzu weist die Vorrichtung 10 wenigstens eine Falteinrichtung 12 auf, welche dazu eingerichtet ist, eine Vielzahl von Falten 2a, 2b, 2c in dem Vliesmaterial 1 zu bilden. Diese verlaufen vorzugsweise im Wesentlichen parallel zueinander. Die Falten 2a, 2b, 2c unterteilen dabei das Vliesmaterial 1 in erste Schenkel 3a, 3b und zweite Schenkel 4a, 4b, wobei das Vliesmaterial 1 in der Weise gefaltet wird, dass eine zickzackförmige Ausgestaltung des Vliesmaterials 1 entsteht.

In einem letzten Arbeitsschritt 103 wird wenigstens ein Bereich des ersten Schenkels 3a, 3b mit wenigstens einem Bereich des zweiten Schenkels 4a, 4b einer Falte 2a, 2b, 2c durch Ausbilden von Schweißbereichen 5a, 5b stoffschlüssig verbunden. Dies geschieht in der Vorrichtung 10 mittels einer Schweißeinrichtung 13, wobei die Schweißeinrichtung 13 in der Weise ausgebildet ist, dass die Schweißbereiche 5a, 5b lediglich an von einander zugewandten Seiten der Schenkel 3a, 3b, 4a, 4b einer Falte 2a, 2b, 2c ausgebildet sind, d. h. dass im Wesentlichen keine strukturelle Veränderung an der Oberfläche von einander abgewandten Seiten der Schenkel 3a, 3b, 4a, 4b einer Falte 2a, 2b, 2c durch das Schwei-ßen entsteht. Vorzugsweise sind im Wesentlichen alle Schweißbereiche wenigstens teilweise an bzw. auf den Ausbuchtungen ausgebildet. Vorzugsweise weist die Schweißeinrichtung 13 ein Heizelement 14 auf, welches zum Verschweißen zwischen die Schenkel 3a, 4a; 3b, 4b einfährt und die Oberflächen des Vliesmaterials 1 in den Schweißbereichen 5a, 5b erhitzt, wobei die Schweißbereiche 5a, 5b beim Ausfahren des Heizelements 14 in Kontakt kommen oder in Kontakt gebracht werden und wenigstens eine Schweißverbindung, insbesondere Schweißnaht, ausbilden. Das Heizelement 14 dient zum Aufbringen von thermischer Energie, um die Oberflächen des Vliesmaterials 1 plastifizieren zu können. Vorzugsweise ist das Heizelement 14 eingerichtet zum Wärmekontakt-Schweißen, Ultraschall-Schweißen, Infrarot-Schweißen und/oder Laser-Schweißen. Im Falle des Wärmekontakt-Schweißens kann das Heizelement als Heizstange oder Heizdraht ausgebildet sein. In jedem Fall ist das Heizelement 14 jedoch in der Weise ausgebildet, um punktuelle oder längliche Fügestellen zwischen den Schenkeln auszubilden.

Vorzugsweise wird das Heizelement 14 zum Verbinden der Schweißbereiche 5a, 5b zwischen benachbarte Schenkel 3a, 4a; 3b, 4b bzw. in die von diesen gebildete Falte 2a, 2b, 2c eingefahren und wieder herausgefahren, wodurch die Schweißbereiche 5a, 5b in den Falten erhitzt werden können. Die Bewegungsrichtung B des Heizelements 14 ist hierbei wenigstens im Wesentlichen senkrecht zur Herstellungsrichtung H ausgerichtet, vorzugsweise vertikal. Weiter vorzugsweise weist die Bewegungsrichtung B zusätzlich eine Komponente auf, welche wenigstens im Wesentlichen parallel zur Herstellungsrichtung H ausgerichtet ist. Hierdurch kann die Herstellungsgeschwindigkeit, d.h. jene Geschwindigkeit, mit welcher sich das Vliesmaterial 1 in Herstellungsrichtung H bewegt, im Bereich der Schweißeinrichtung 13 vergleichsweise erhöht werden.

Ferner sei darauf hingewiesen, dass es sich bei den Ausführungsbeispielen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einem Ausführungsbeispiel gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 1: Vliesmaterial
- 2a, 2b, 2c: Falte
- 3a, 3b: erster Schenkel
- 4a, 4b: zweiter Schenkel
- 5a, 5b: Schweißbereich
- 6: erste Oberfläche
- 7: zweite Oberfläche
- 8a, 8b: erste Ausbuchtung
- 9a, 9b: zweite Ausbuchtung
- 10: Vorrichtung
- 11: Prägeeinrichtung
- 12: Falteinrichtung
- 13: Schweißeinrichtung
- 14: Heizelement
- L: Längsrichtung der Falte
- H: Herstellungsrichtung
- B: Bewegungsrichtung

## Patentansprüche

1. Zickzack-gefaltetes Vliesmaterial (1) für einen Filter, welches eine Vielzahl an Falten (2a, 2b, 2c) aufweist, welche das Vliesmaterial (1) in erste Schenkel (3a, 3b) und zweite Schenkel (4a, 4b) unterteilen, wobei jeweils zwischen einem ersten Schenkel (3a, 3b) und einem zweiten Schenkel (4a, 4b) einer Falte (2a, 2b, 2c) in wenigstens einem Schweißbereich (5a, 5b) eine stoffschlüssige Schweißverbindung angeordnet ist, welche den ersten Schenkel (3a; 3b) mit dem zweiten Schenkel (4a; 4b) verbindet, wobei Schweißbereiche (5a, 5b), welche zwei Schenkel (3a, 4a; 3b, 4b) einer Falte (2a, 2b, 2c) verbinden, ausschließlich an einander zugewandten Seiten der Schenkel (3a, 4a; 3b, 4b) der Falte (2a, 2b, 2c) ausgebildet sind, wobei die Oberfläche wenigstens im Schweißbereich (5a, 5b) von einander zugewandten Seiten der Schenkel (3a, 4a; 3b, 4b) einer Falte (2a, 2b, 2c) durch die Schweißverbindung verändert ist und die Oberfläche des Bereichs der dem Schweißbereich (5a, 5b) gegenüberliegenden Seite der Schenkel (3a, 4a; 3b, 4b) einer Falte (2a; 2b; 2c) durch die Schweißverbindung im Wesentlichen nicht verändert ist.

2. Vliesmaterial (1) nach Anspruch 1, wobei wenigstens die Oberfläche der Schweißbereichen (5a, 5b) gegenüberliegenden Seiten der Schenkel des Vliesmaterials (1) eine Strukturierung aufweist, welche insbesondere rautenförmig und/oder wabenförmig ausgebildet ist.

3. Vliesmaterial (1) nach einem der Ansprüche 1 oder 2, wobei mehrere Schweißbereiche (5a, 5b) zwischen den Schenkeln (3a, 3b, 4a, 4b) einer Falte (2a, 2b, 2c) wenigstens im Wesentlichen senkrecht zur Längsrichtung (L) der Falte (2a, 2b, 2c) ausgebildet sind.

4. Vliesmaterial (1) nach einem der Ansprüche 1 bis 3, wobei die Schweißbereiche (5a, 5b) an wenigstens einer Ausbuchtung (8a, 8b) in dem ersten Schenkel (3a, 3b) und/oder an wenigstens einer Ausbuchtung (9a, 9b) in dem zweiten Schenkel (4a, 4b) einer Falte (2a, 2b, 2c) angeordnet sind, wobei die Ausbuchtungen (8a, 9a; 8b, 9b) einander zugewandt sind.

5. Vliesmaterial (1) nach Anspruch 4, wobei die wenigstens eine Ausbuchtung (8a, 8b, 9a, 9b) des ersten Schenkels (3a, 3b) und/oder des zweiten Schenkels (4a, 4b) einer Falte (2a, 2b, 2c) wenigstens im Wesentlichen senkrecht zur Längsrichtung (L) der Falte (2a, 2b, 2c) ausgebildet ist.

6. Vliesmaterial (1) nach Anspruch 4 oder 5, wobei eine Ausbuchtung (8a, 8b) des ersten Schenkels (3a, 3b) und eine Ausbuchtung (9a, 9b) des zweiten Schenkels (4a, 4b) einer Falte (2a, 2b, 2c) im Wesentlichen gegenüberliegend angeordnet sind.

7. Vliesmaterial (1) nach einem der Ansprüche 1 bis 6, wobei sich die Ausbuchtung (8a, 8b) des ersten Schenkels (3a, 3b) und/oder die Ausbuchtung (9a, 9b) des zweiten Schenkels (4a, 4b) einer Falte (2a, 2b, 2c) ausgehend von der Falte (2a, 2b, 2c), insbesondere kontinuierlich oder stufenweise zunehmend, erhebt, wobei vorzugsweise die Erhebung der Ausbuchtung (8a, 8b, 9a, 9b) des ersten Schenkels (3a, 3b) und/oder des zweiten Schenkels (4a, 4b) im Wesentlichen an der Falte (2a, 2b, 2c) am geringsten ist.

8. Vliesmaterial (1) nach einem der Ansprüche 1 bis 7, wobei das Vliesmaterial (1) aus wenigstens zwei Lagen ausgebildet ist.

9. Vliesmaterial nach einem der Ansprüche 1 bis 8 mit mehreren Lagen, wobei eine erste Lage an einer zu schweißenden Oberfläche des Vliesmaterials ein anderes Polymer oder eine andere Polymermischung mit einem niedrigeren Schmelzpunkt als eine zweite Lage aufweist.

10. Vliesmaterial nach Anspruch 9, wobei die erste Lage ein Plateau zum Aufbringen der Schweißung, insbesondere mit einer Dicke von etwa 1 mm bis 5mm, aufweist.

11. Filter mit einem Vliesmaterial (1) nach einem der Ansprüche 1 bis 10.

## Claims

1. A Zigzag-folded nonwoven material (1) for a filter, having a plurality of folds (2a, 2b, 2c) which divide the nonwoven material (1) into first legs (3a, 3b) and second legs (4a, 4b), wherein a materially bonded weld connection is arranged, in each case between a first leg (3a, 3b) and a second leg (4a, 4b) of a fold (2a, 2b, 2c), in at least one weld region (5a, 5b), which connects the first leg (3a; 3b) to the second leg (4a; 4b), wherein weld regions (5a, 5b) which connect two legs (3a, 4a; 3b, 4b) of a fold (2a, 2b, 2c) are formed exclusively on mutually facing sides of the legs (3a, 4a; 3b, 4b) of the fold (2a, 2b, 2c), wherein the surface, at least in the weld region (5a, 5b), of mutually facing sides of the legs (3a, 4a; 3b, 4b) of a fold (2a, 2b, 2c) is altered by the weld connection, and the surface of the region of the side of the legs (3a, 4a; 3b, 4b) of a fold (2a; 2b; 2c) opposite the weld region (5a, 5b) is substantially unaltered by the weld connection.

2. The nonwoven material (1) according to claim 1, wherein at least the surface of the sides of the legs of the nonwoven material (1) opposite the weld regions (5a, 5b) has a structuring which is in particular formed as a diamond pattern and/or honeycomb pattern.

3. The nonwoven material (1) according to either of claims 1 or 2, wherein a plurality of weld regions (5a, 5b) are formed between the legs (3a, 3b, 4a, 4b) of a fold (2a, 2b, 2c) at least substantially perpendicular to the longitudinal direction (L) of the fold (2a, 2b, 2c).

4. The nonwoven material (1) according to one of claims 1 to 3, wherein the weld regions (5a, 5b) are arranged on at least one bulge (8a, 8b) in the first leg (3a, 3b) and/or on at least one bulge (9a, 9b) in the second leg (4a, 4b) of a fold (2a, 2b, 2c), wherein the bulges (8a, 9a; 8b, 9b) face one another.

5. The nonwoven material (1) according to claim 4, wherein the at least one bulge (8a, 8b, 9a, 9b) of the first leg (3a, 3b) and/or of the second leg (4a, 4b) of a fold (2a, 2b, 2c) is formed at least substantially perpendicular to the longitudinal direction (L) of the fold (2a, 2b, 2c).

6. The nonwoven material (1) according to claim 4 or 5, wherein a bulge (8a, 8b) of the first leg (3a, 3b) and a bulge (9a, 9b) of the second leg (4a, 4b) of a fold (2a, 2b, 2c) are arranged substantially opposite one another.

7. The nonwoven material (1) according to one of claims 1 to 6, wherein the bulge (8a, 8b) of the first leg (3a, 3b) and/or the bulge (9a, 9b) of the second leg (4a, 4b) of a fold (2a, 2b, 2c) rises starting from the fold (2a, 2b, 2c), in particular continuously or in a stepwise increasing manner, wherein preferably the rise of the bulge (8a, 8b, 9a, 9b) of the first leg (3a, 3b) and/or of the second leg (4a, 4b) is substantially smallest at the fold (2a, 2b, 2c).

8. The nonwoven material (1) according to one of claims 1 to 7, wherein the nonwoven material (1) is formed from at least two layers.

9. The nonwoven material according to one of claims 1 to 8, having a plurality of layers, wherein a first layer comprises, at a surface of the nonwoven material to be welded, a different polymer or a different polymer mixture having a lower melting point than a second layer.

10. The nonwoven material according to claim 9, wherein the first layer comprises a plateau for applying the weld, in particular having a thickness of about 1 mm to 5 mm.

11. Filter having a nonwoven material (1) according to one of claims 1 to 10.

## Revendications

1. Matériau non tissé (1) plié en zigzag pour un filtre, qui présente une pluralité de plis (2a, 2b, 2c), qui divisent le matériau non tissé (1) en premières branches (3a, 3b) et en deuxièmes branches (4a, 4b), dans lequel est disposée respectivement entre une première branche (3a, 3b) et une deuxième branche (4a, 4b) d'un pli (2a, 2b, 2c) dans au moins une zone de soudure (5a, 5b) une liaison soudée par liaison de matière, qui relie la première branche (3a ; 3b) à la deuxième branche (4a ; 4b), dans lequel des zones de soudure (5a, 5b), qui relient deux branches (3a, 4a ; 3b, 4b) d'un pli (2a, 2b, 2c), sont réalisées exclusivement sur des côtés, tournés les uns vers les autres, des branches (3a, 4a ; 3b, 4b) du pli (2a, 2b, 2c), dans lequel la surface est modifiée au moins dans la zone de soudure (5a, 5b) de côtés, tournés les uns vers les autres, des branches (3a, 4a ; 3b, 4b) d'un pli (2a, 2b, 2c) par la liaison soudée et la surface de la zone du côté, opposé à la zone de soudure (5a, 5b), des branches (3a, 4a ; 3b, 4b) d'un pli (2a ; 2b ; 2c) n'est sensiblement pas modifiée par la liaison soudée.

2. Matériau non tissé (1) selon la revendication 1, dans lequel au moins la surface des côtés, opposés à des zones de soudure (5a, 5b), des branches du matériau non tissé (1) présente une structuration, qui est réalisée en particulier en forme de losange et/ou en forme d'alvéole.

3. Matériau non tissé (1) selon l'une quelconque des revendications 1 ou 2, dans lequel plusieurs zones de soudure (5a, 5b) entre les branches (3a, 3b, 4a, 4b) d'un pli (2a, 2b, 2c) sont réalisées au moins sensiblement perpendiculairement à la direction longitudinale (L) du pli (2a, 2b, 2c).

4. Matériau non tissé (1) selon l'une quelconque des revendications 1 à 3, dans lequel les zones de soudure (5a, 5b) sont disposées sur au moins un renflement (8a, 8b) dans la première branche (3a, 3b) et/ou sur au moins un renflement (9a, 9b) dans la deuxième branche (4a, 4b) d'un pli (2a, 2b, 2c), dans lequel les renflements (8a, 9a ; 8b, 9b) sont tournés les uns vers les autres.

5. Matériau non tissé (1) selon la revendication 4, dans lequel l'au moins un renflement (8a, 8b, 9a, 9b) de la première branche (3a, 3b) et/ou de la deuxième branche (4a, 4b) d'un pli (2a, 2b, 2c) est réalisé au moins sensiblement perpendiculairement à la direction longitudinale (L) du pli (2a, 2b, 2c).

6. Matériau non tissé (1) selon la revendication 4 ou 5, dans lequel un renflement (8a, 8b) de la première branche (3a, 3b) et un renflement (9a), 9b) de la deuxième branche (4a, 4b) d'un pli (2a, 2b, 2c) sont disposés sensiblement en vis-à-vis.

7. Matériau non tissé (1) selon l'une quelconque des revendications 1 à 6, dans lequel le renflement (8a, 8b) de la première branche (3a, 3b) et/ou le renflement (9a, 9b) de la deuxième branche (4a, 4b) d'un pli (2a, 2b, 2c) s'élèvent, en particulier en continu ou progressivement, en partant du pli (2a, 2b, 2c), dans lequel, de préférence, l'élévation du renflement (8a, 8b, 9a, 9b) de la première branche (3a, 3b) et/ou de la deuxième branche (4a, 4b) est sensiblement la plus faible sur le pli (2a, 2b, 2c).

8. Matériau non tissé (1) selon l'une quelconque des revendications 1 à 7, dans lequel le matériau non tissé (1) est réalisé à partir d'au moins deux couches.

9. Matériau non tissé selon l'une quelconque des revendications 1 à 8 avec plusieurs couches, dans lequel une première couche présente sur une surface à souder du matériau non tissé un autre polymère ou un autre mélange de polymères avec un point de fusion inférieur à celui d'une deuxième couche.

10. Matériau non tissé selon la revendication 9, dans lequel la première couche présente un plateau d'application de la soudure, en particulier avec une épaisseur d'environ 1 mm à 5 mm.

11. Filtre avec un matériau non tissé (1) selon l'une quelconque des revendications 1 à 10.
